# EUROPEAN PATENT APPLICATION

(11) **EP 4 674 611 A1**
(43) Date of publication of application: **07.01.2026**
(21) Application number: 24763761.4
(22) Date of filing: 22.02.2024
(51) Int. Cl.: B32B 3/30, B29C 45/14, B29C 59/04, B29D 7/01, B32B 7/022

(54) **LAMINATED RESIN SHEET INCLUDING PROTECTIVE LAYER AND RESIN SHEET BODY HAVING HAIR-LIKE BODIES, AND PRODUCTION METHOD THEREFOR AND MOLDED PRODUCT THEREOF**

(30) Priority: 28.02.2023 JP 2023030224
(71) Applicant: Denka Company Limited, Tokyo 103-8338 (JP)
(72) Inventor: MAEDA, Keishi, Tokyo 103-8338 (JP); KURABAYASHI, Ryoya, Tokyo 103-8338 (JP); MIZOTE, Norihito, Tokyo 103-8338 (JP); NAKANO, Shunsuke, Tokyo 103-8338 (JP)
(74) Representative: Müller-Boré & Partner Patentanwälte PartG mbB
(86) International application number: PCT/JP2024/006431
(87) International publication number: WO 2024/181280

(57) **Abstract**

The purpose of the present invention is to provide a laminated resin sheet in which whitening and loss of tactile sensation are suppressed even after performing secondary molding, and a production method therefor and a molded product thereof. Provided is a laminated resin sheet including: a resin sheet body having hair-like bodies arranged regularly on at least one surface of a base layer, a continuous phase being formed without a structural boundary between the base layer and the hair-like bodies; and a protective layer filling gaps between the hair-like bodies and covering the surface of the resin sheet body on the side having the hair-like bodies, the tensile modulus of the protective layer at 20 °C being 0.2 MPa or more and less than 2 MPa, the average thickness of the protective layer being greater than the average height of the hair-like bodies.

## Description

### TECHNICAL FIELD

The present invention pertains to a laminated resin sheet including a protective layer and a resin sheet body having hair-like bodies, a production method therefor, and a molded product thereof.

### BACKGROUND

Conventionally, sheets made of paper and polymer materials are used as interior materials of automobiles and the housings of associated components, housings of electronic devices and home appliances, building materials such as wallpaper, housings for toys and game consoles, and members of daily commodities. In addition, as a method to provide a good tactile sensation to a surface of a sheet, Patent Document 1, for example, presents a resin sheet having hair-like bodies arranged regularly on a surface thereof.
Meanwhile, when such a resin sheet is used as, for example, an interior article of an automobile such as a dashboard or seats, there is a need to affix the resin sheet to the surface of an object after secondary molding.

Patent Document 1: WO 2018/016562 A

### SUMMARY OF INVENTION

However, it has been found that such a resin sheet has a risk in which the step of affixing the resin sheet to the surface of an object after secondary molding causes the hair-like bodies to deform and tilt and fall over, resulting in whitening of the external appearance of the sheet and loss of tactile sensation.
The present invention addresses a problem of providing a laminated resin sheet in which whitening and loss of tactile sensation are suppressed even after performing secondary molding, and a production method therefor and a molded product thereof.

That is, as a result of investigating various means, the present inventors discovered that by forming a laminated resin sheet including a resin sheet body having hair-like bodies arranged regularly on at least one surface of a base layer, a continuous phase being formed without a structural boundary between the base layer and the hair-like bodies, and a protective layer filling the gaps between the hair-like bodies and covering the surface of the resin sheet body on the side having the hair-like bodies, the tensile modulus of the protective layer at 20 °C being 0.2 MPa or more and less than 2 MPa, a laminated resin sheet in which whitening and loss of tactile sensation are suppressed even after performing secondary molding is obtained. This led to the completion of the present invention.

The present invention, which solves the problem above, is configured as follows.
[1] A laminated resin sheet including: a resin sheet body having hair-like bodies arranged regularly on at least one surface of a base layer, a continuous phase being formed without a structural boundary between the base layer and the hair-like bodies; and a protective layer filling gaps between the hair-like bodies and covering a surface of the resin sheet body on the side having the hair-like bodies, a tensile modulus of the protective layer at 20 °C being 0.2 MPa or more and less than 2 MPa, an average thickness of the protective layer being greater than an average height of the hair-like bodies.
[2] The laminated resin sheet according to [1], wherein a peeling strength between the resin sheet body and the protective layer is 0.01 to 0.10 N/mm.
[3] The laminated resin sheet according to [1] or [2], wherein a tensile strength of the protective layer is 1.0 to 10.0 MPa.
[4] The laminated resin sheet according to any one of [1] to [3], wherein an average thickness of the protective layer is 50 to 600 µm.
[5] The laminated resin sheet according to any one of [1] to [4], wherein when an angle of the hair-like bodies when extending perpendicular to a surface of the base layer is assumed to be 0°, an average value of the angle of the hair-like bodies that increases due to heat molding is 0 to 10°.
[6] The laminated resin sheet according to any one of [1] to [5], wherein an average height of the hair-like bodies is 30 µm or more and 500 µm or less, an average diameter of the hair-like bodies is 1 µm or more and 50 µm or less, and an average spacing between the hair-like bodies is 20 µm or more and 200 µm or less.
[7] The laminated resin sheet according to any one of [1] to [6], wherein an average thickness of the resin sheet body is 80 µm or more and less than 350 µm.
[8] A production method for the laminated resin sheet according to any one of [1] to [6], the production method comprising: forming the protective layer on a surface of the resin sheet body on the side having the hair-like bodies.
[9] A molded product of the laminated resin sheet according to any one of [1] to [6].
[10] The molded product according to [9], wherein the molded product is an insert-molded product or a vacuum-molded product.
[11] The molded product according to [9], wherein the molded product is provided on an automobile interior material, an electronic device cladding, or a cosmetic container surface.

According to the present invention, it is possible to provide a laminated resin sheet in which whitening and loss of tactile sensation are suppressed even after performing secondary molding, and a production method therefor and a molded product thereof.

### BRIEF DESCRIPTION OF DRAWINGS

Figure 1 is a schematic vertical side cross-sectional view showing a laminated resin sheet according to a first embodiment of the present invention.
Figure 2 is a schematic plan view of a resin sheet body.
Figure 3 is a schematic vertical side cross-sectional view showing a laminated resin sheet according to a second embodiment of the present invention.

### DESCRIPTION OF EMBODIMENTS

Below, various embodiments of the resin sheet are described, followed by a description of a production method for the resin sheet, but in cases where a specific description provided for one embodiment applies to another embodiment, the corresponding description for the other embodiment shall be omitted.

### [First Embodiment]

A resin sheet according to the first embodiment of the present invention is a laminated resin sheet including a resin sheet body having hair-like bodies arranged regularly on at least one surface of a base layer, a continuous phase being formed without a structural boundary between the base layer and the hair-like bodies, and a protective layer filling gaps between the hair-like bodies and covering the surface of the resin sheet body on the side having the hair-like bodies, the tensile modulus of the protective layer at 20 °C being 0.2 MPa or more and less than 2 MPa, the average thickness of the protective layer being greater than the average height of the hair-like bodies. That is, the layer configuration of the laminated resin sheet according to the present embodiment is, from top to bottom, a protective layer (2), hair-like bodies, and a base layer (1).

### <Base Layer>

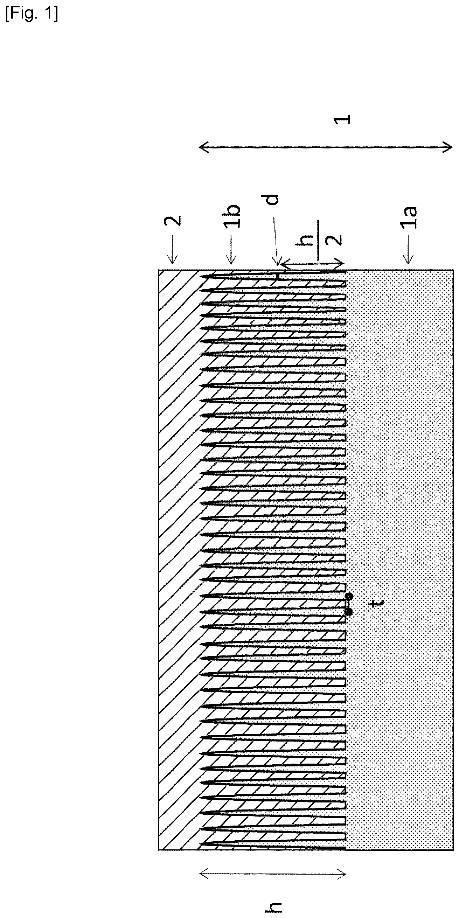

A base layer (1a) is a layer serving as a base for hair-like bodies and, of what is denoted by reference sign 1 in Figure 1, refers to the portion other than the hair-like bodies (1b) on the surface. The thickness of the base layer refers to the thickness from the roots of the hair-like bodies to the surface on the opposite side of the base layer. The average thickness of the base layer is preferably 15 to 300 µm, more preferably 30 to 280 µm, and even more preferably 50 to 250 µm. By setting the thickness to 15 µm or more, the height of the hair-like bodies can be sufficiently expressed. In addition, by setting the thickness to 300 µm or less, the hair-like bodies can be formed efficiently. The average thickness of the base layer can be measured by measuring the thickness from the roots of the hair-like bodies to the interface with the other layer at 10 locations on samples obtained by cutting cross-sectional slices from a sheet at three random locations using a microtome, and then calculating the arithmetic mean value of the 30 measurements. A continuous phase may be formed without a structural boundary between the base layer and the hair-like bodies. The absence of a structural boundary means that the base layer and the hair-like bodies are integrally formed and that there is no structurally clear boundary section therebetween. In addition, forming a continuous phase refers to a state in which there is no seam between the base layer and the hair-like bodies and no discontinuities (a continuous phase is formed). This feature differs from a structure in which hair-like bodies are transplanted to a base layer. The base layer and the hair-like bodies may have the same composition and the bonds between the base layer and the hair-like bodies may include covalent bonds. A covalent bond refers to a chemical bond formed by an electron pair being shared by two atoms and in thermoplastic resins that are chain molecules in which monomers are connected, each polymer is bonded by a covalent bond and is bonded more strongly than by the van der Waals bonds or hydrogen bonds acting between polymer molecules.
In addition, the base layer and the hair-like bodies may be derived not from separate, but from the same solid thermoplastic resin sheet. Being derived from the same solid thermoplastic resin sheet means that, for example, the hair-like bodies and the base layer are obtained, directly or indirectly, based on the same resin sheet.
In addition, the base layer and the hair-like bodies may be formed from the same solid thermoplastic resin sheet. Being formed from the same solid thermoplastic resin sheet means that the hair-like bodies and the base layer are directly formed by processing a single resin sheet.
By forming a continuous phase without a structural boundary between the base layer and the hair-like bodies, the hair-like bodies separating from the base layer due to an external stimulus is suppressed and a sheet having a good tactile sensation is achieved. In addition, producing with fewer steps than when transplanting hair-like bodies becomes possible.

The base layer and the hair-like bodies consist of the same thermoplastic resin composition having a thermoplastic resin as a main component. Here, having as a main component means containing 50% by mass or more. Preferably, the thermoplastic resin composition contains 60% by mass or more, 70% by mass or more, 80% by mass or more, or 90% by mass or more. In one embodiment of the present invention, it is possible to use a resin including at least one of a urethane-based elastomer (TPU), a styrene-based resin, a polyolefin-based resin, a polyvinyl chloride resin, a thermoplastic elastomer, and a fluorine-based resin.

The urethane-based elastomer is a resin that has a diisocyanate and a polyol as reaction raw materials and, as the combination thereof, any combination in which the diisocyanate is diphenylmethane diisocyanate (MDI)-based, H₁₂ MDI-based, or hexamethylene diisocyanate (HDI)-based and the polyol is polyether-based, polyester-based, or polycarbonate-based may be selected, and a plurality thereof may be combined. In one embodiment of the present invention, a combination of an MDI-based or HDI-based diisocyanate and a carbonate-based polyol can be suitably used.

As the styrene-based resin, a homopolymer or copolymer of a styrene-based monomer such as styrene, α-methylstyrene, p-methylstyrene, dimethylstyrene, p-t-butylstyrene, or chlorostyrene, a copolymer of such a styrene-based monomer and another monomer, for example, a styrene-acrylonitrile copolymer (AS resin), or of the styrene-based monomer and yet another polymer, for example, a graft polymer graft-polymerized in the presence of a diene-based rubber-like polymer such as polybutadiene, a styrene-butadiene copolymer, polyisoprene, or polychloroprene, or a polystyrene such as, for example, high-impact polystyrene (HIPS resin) or a styrene-acrylonitrile graft polymer (ABS resin) can be used. In addition, a styrene-based thermoplastic elastomer can also be used.

A polyolefin-based resin means a resin consisting of a polymer including α-olefin as a monomer and includes polyethylene-based resins and polypropylene-based resins. A high-density polyethylene, a low-density polyethylene, a linear low-density polyethylene, a linear medium-density polyethylene, and the like can be used as the polyethylene resin and not only these alone, but a copolymer, graft, or blend having these structures can also be used. Examples of the latter resin include, for example, products of copolymerizing or blending a resin having a polar group in a polyethylene chain, such as blends with an ethylene-vinyl acetate copolymer, an ethylene-acrylic acid copolymer, an ethylene-acrylic acid ester copolymer, an ethylene-methacrylic acid ester copolymer, an ethylene-vinyl acetate-vinyl chloride copolymer, and a terpolymer with an acid anhydride.

In addition, a homopolypropylene, a random polypropylene, a block polypropylene, or the like can be used as the polypropylene resin. When using a homopolypropylene, the structure of the homopolypropylene may be any of isotactic, atactic, and syndiotactic. When using a random polypropylene, a substance preferably having 2 to 20 carbon atoms, more preferably 4 to 12 carbon atoms, such as ethylene, 1-butene, 1-pentene, 1-hexene, 1-heptene, 1-octene, 1-nonene, or 1-decene, can be used as the α-olefin to be copolymerized with propylene. When using a block polypropylene, a block copolymer (block polypropylene), a block copolymer including a rubber component, a graft copolymer, or the like can be used. These olefin resins can be used alone and can also be used in combination with other olefin-based resins.

A vinyl chloride homopolymer or a copolymer of vinyl chloride and another comonomer can be used as the polyvinyl chloride resin. When the polyvinyl chloride is a copolymer, the polyvinyl chloride may be a random copolymer or may be a graft copolymer. One example of a graft copolymer is a copolymer in which, for example, an ethylene-vinyl acetate copolymer or a thermoplastic urethane polymer is used as the backbone polymer and vinyl chloride is graft-polymerized thereto. The polyvinyl chloride of the present embodiment refers to an extrusion-moldable soft polyvinyl chloride, which is a composition containing an additive such as a polymer plasticizer. A known polymer plasticizer can be used as the polymer plasticizer, but, for example, preferred examples include an ethylene copolymer polymer plasticizer such as an ethylene-vinyl acetate-carbon monoxide copolymer, an ethylene-(meth)acrylic acid ester-carbon monoxide copolymer, and an ethylene-vinyl acetate copolymer with a high vinyl acetate content.

The thermoplastic elastomer includes substances having a structure in which a soft polymer substance and a hard polymer substance are combined. Specifically, examples include styrene-based elastomers, olefin-based elastomers, vinyl chloride-based elastomers, polyester-based elastomers, and polyamide-based elastomers. These elastomers can be selected from among those generally commercially available and used.

A vinylidene fluoride homopolymer and a vinylidene fluoride copolymer having vinylidene fluoride as the main component can be used as the fluorine-based resin. Polyvinylidene fluoride (PVDF) resins are crystalline resins exhibiting various crystal structures such as α-type, β-type, γ-type, and αp-type, and examples of the vinylidene fluoride copolymer include vinylidene fluoride-hexafluoropropylene copolymers, vinylidene fluoride-tetrafluoroethylene copolymers, vinylidene fluoride-chlorotrifluoroethylene copolymers, vinylidene fluoride-trifluoroethylene copolymers, vinylidene fluoride-tetrafluoroethylene-hexafluoropropylene terpolymers, vinylidene fluoride-chlorotrifluoroethylene-hexafluoropropylene terpolymers, and mixtures of two or more thereof.

The melt mass flow rate of the thermoplastic resin composition at 190 to 300 °C is preferably 4 g/10 minutes or more. By setting the melt mass flow rate to 4 g/10 minutes or more, the transferability of the shape of the hair-like bodies can be improved. In addition, the melt mass flow rate is a value measured according to JIS K 7210 under the conditions of a load (2.16 to 10.0 kg) at a test temperature in the temperature range from 190 to 300 °C.

The thermoplastic resin composition may be alloyed with the thermoplastic resins above at any ratio so long as the effects of the present invention are not inhibited. Furthermore, the thermoplastic resin composition may contain other additives. So long as the effects of the present invention are not inhibited, it is possible to add, as the other additives, an additive such as a water/oil repellent, a colorant such as a pigment or a dye, a lubricant/mold release agent such as silicone oil or an alkyl ester-based agent, a fibrous reinforcing agent such as glass fibers, granular microparticles such as talc, clay, or silica or scaly microparticles such as mica as a filler, a low molecular weight type anti-static agent such as a salt compound of sulfonic acid and an alkali metal and the like, or a high molecular weight type anti-static agent such as polyether ester amide, a flame retardant, an anti-bacterial agent, an anti-viral agent, or a heat stabilizer. In addition, scrap resin generated in the resin sheet production process can also be mixed and used.

Examples of the water/oil repellent include silicone-based water repellents, carnauba wax, and fluorine-based water/oil repellents. Examples of the silicone include organopolysiloxane, dimethylpolysiloxane, methylphenylpolysiloxane, methylhydrogenpolysiloxane, and the like and, among these, dimethylpolysiloxane is suitably used. Examples of commercially available products include "Clinbell CB50-PP", "Clinbell CB-30PE", "Clinbell CB-1", "Clinbell CB-50AB" (manufactured by Fuji Chemical Industries, Ltd.), and the like in which silicone is alloyed with a resin. Examples of the carnauba wax include, as commercially available products, "Carnauba No. 1" (manufactured by NIKKO RICA CORPORATION) and the like. Examples of the fluorine-based water/oil repellent include surfactants having a perfluoroalkyl group and also include, as a commercially available product, "SURFLON KT-PA" (manufactured by AGC SEIMI CHEMICAL CO., LTD.). The amount of the water/oil repellent added is preferably 0.5% by mass to 25% by mass. At less than 0.5% by mass, there is a risk of not being able to obtain sufficient water/oil repelling effects, and at greater than 25% by mass, there is a risk of poor moldability.

Examples of the anti-static agent include polyether ester amide-based high molecular weight type anti-static agents, ionomer-based high molecular weight type anti-static agents, and the like. Examples of the polyether ester amide-based high molecular weight type anti-static agent include, as commercially available products, "PELESTAT 230," "PELESTAT 6500," "PELECTRON AS," "PELECTRON HS" (manufactured by Sanyo Chemical Industries, Ltd.), and the like. Examples of the ionomer-based high molecular weight type anti-static agent include, as commercially available products, "ENTIRA SD100", "ENTIRA MK400" (manufactured by Du Pont-Mitsui Polychemicals Co., Ltd.), and the like. The amount of the anti-static agent added is preferably 5% by mass to 30% by mass. At less than 5% by mass, there is a risk of not being able to obtain sufficient anti-static properties, and at greater than 30% by mass, the production costs increase.

As the anti-bacterial agent, among inorganic-based and organic-based anti-bacterial agents, either may be added. Considering dispersibility, inorganic-based agents are preferable. Specifically, examples include metal ion (Ag, Zn, Cu) inorganic-based anti-bacterial agents, calcined shell calcium-based anti-bacterial agents, and the like. Examples of commercially available metal ion inorganic-based anti-bacterial agents include "Bactekiller BM102VT" (manufactured by Fuji Chemical Industries, Ltd.), "NOVARON VZF200", "NOVARON (AG300)" (manufactured by TOAGOSEI CO., LTD.), "KM-10D-G", "IM-10D-L" (manufactured by Sinanen Zeomic Co., Ltd.), and the like. Examples of calcined shell calcium-based anti-bacterial agents include "Scallow" (manufactured by FID, Ltd.) and the like. The amount of the anti-bacterial agent added is preferably 0.5% by mass to 5% by mass. At less than 0.5% by mass, there is a risk of not being able to obtain sufficient anti-bacterial properties, and at greater than 5% by mass, the production costs increase.

As the lubricant/mold release agent, an alkyl-based lubricant/mold release agent such as an aliphatic hydrocarbon-based compound, a higher fatty acid-based compound, a higher aliphatic alcohol-based compound, or a fatty acid amide-based compound, a silicone-based lubricant/mold release agent, a fluorine-based lubricant/mold release agent, and the like can be used. When a lubricant/mold release agent is used, the amount added is preferably 0.01 to 5 parts by mass, more preferably 0.05 to 3 parts by mass, and even more preferably 0.1 to 2 parts by mass of a total of 100 parts by mass with the resin composition. By setting the amount added to 0.01 parts or more, the risk of reduced mold releasing effect is reduced, and by setting the amount added to 5 parts by mass or less, the risk of bleed-out on the sheet surface is reduced.

In addition, it is also possible to use a masterbatch or the like in which a lubricant/mold release agent is alloyed in advance with a thermoplastic resin. Examples of commercially available masterbatches based on a urethane-based thermoplastic elastomer include "Waxmaster V" (manufactured by BASF), and considering production efficiency, it is preferable that a masterbatch be used. The amount of masterbatch added is preferably 1 to 8 parts by mass, more preferably 2 to 7 parts by mass, and even more preferably 3 to 6 parts by mass of a total of 100 parts by mass with the resin composition.

### <Hair-Like Bodies>

Hair-like bodies (1b) refers to a portion extending hair-like from the surface of the base layer (1a), as shown in Figure 1. The hair-like bodies are arranged regularly on the surface of the base layer. Here, arranged regularly means a state in which the hair-like bodies are not arranged randomly, that is, a state of being arranged in an orderly fashion (e.g., at a certain spacing) in one direction or in two directions. Whether or not the arrangement of the hair-like bodies is regular is determined based on the state of arrangement of the roots of the hair-like bodies. In some embodiments, the hair-like bodies are positioned on the base layer at a predetermined spacing and the positions of the bottom surfaces of the hair-like bodies are arranged in an orderly fashion in the longitudinal direction and the transverse direction of the base layer. In addition, the form of arrangement of the hair-like bodies is not particularly limited and a vertically and horizontally arranged grid arrangement, a staggered arrangement, or the like can be selected. Due to the hair-like bodies being arranged regularly on the surface of the base layer, a good tactile sensation is readily expressed, uniformly and without irregularities. Falling over of the hair-like bodies occurs due to the application of a load such as, for example, tracing with a finger, and finger marks in which the gloss and color tone differ from those of the surrounding portion can be formed. In addition, due to the hair-like bodies, the tactile sensation can become like that of a suede-like napped sheet.

The average height (h) of the hair-like bodies is preferably 30 to 500 µm, more preferably 60 to 250 µm, even more preferably 80 to 200 µm, and even more preferably 90 to 180 µm. By setting the average height to 30 µm or more, a good tactile sensation can be sufficiently ensured and by setting the average height to 500 µm or less, a good tactile sensation such as moistness, softness, and fluffiness is obtained.
When the hair-like bodies are standing roughly straight with respect to the base layer, the length from the root to the tip of the hair-like bodies represents the height of the hair-like bodies. Meanwhile, when the hair-like bodies are slanted with respect to the base layer or when the hair-like bodies have a portion that curls, the distance from the surface of the base layer at the location of the hair-like bodies farthest from the surface of the base layer is made the height h of the hair-like bodies. In addition, the total value of the spacing from the tip to a central portion of the root of the hair-like bodies, segmented by multi-point measurement, is made the length L of the hair-like bodies.
The average height of the hair-like bodies and the average length of the hair-like bodies can be obtained by using an electron microscope and image processing software to measure the height of the hair-like bodies and the length of the hair-like bodies at a number of arbitrary locations on the resin sheet and using the arithmetic mean value of the measurements.

The average diameter (d) of the hair-like bodies is preferably 1 to 50 µm, more preferably 5 to 50 µm, and even more preferably 5 to 40 µm. By setting the average diameter of the hair-like bodies to 1 µm or more, a good tactile sensation can be ensured and by setting the average diameter of the hair-like bodies to 50 µm or less, a good tactile sensation such as moistness, softness, and fluffiness is obtained. The average diameter of the hair-like bodies is a value obtained by using an electron microscope and image processing software to measure the diameter at mid-height (h/2) of the hair-like bodies at a number of locations on the resin sheet body and using the arithmetic mean value of the measurements.
In addition, the aspect ratio of the hair-like bodies can be represented as (average height of the hair-like bodies/average diameter of the hair-like bodies). The aspect ratio of the hair-like bodies is preferably 2 to 20, more preferably 2 to 10, and even more preferably 2 to 5. By setting the aspect ratio to 2 or more, a good tactile sensation can be ensured and by setting the aspect ratio to 20 or less, not only is a good tactile sensation such as moistness, softness, and fluffiness obtained, but the risk of the height-to-length ratio of the hair-like bodies becoming no higher than a certain level can be reduced.
Meanwhile, the average bottom surface diameter of the hair-like bodies can also serve as a reference for the aspect ratio. The average bottom surface diameter of the hair-like bodies is preferably 10 to 150 µm, more preferably 20 to 120 µm, and even more preferably 30 to 100 µm. The average bottom surface diameter of the hair-like bodies is a value obtained by measuring the spacing between neighboring hair-like bodies at a number of locations on the resin sheet body and using the arithmetic mean value of the measurements. The aspect ratio, when the bottom surface diameter of the hair-like bodies serves as a reference therefor, is preferably 1.0 to 10, more preferably 1.0 to 5, and even more preferably 1.0 to 2.5. By setting the aspect ratio to 1.0 or more, a good tactile sensation can be ensured, and by setting the aspect ratio to 10 or less, not only is a good tactile sensation such as moistness, softness, and fluffiness obtained, but the risk of the height-to-length ratio of the hair-like bodies becoming no higher than a certain level can also be reduced.

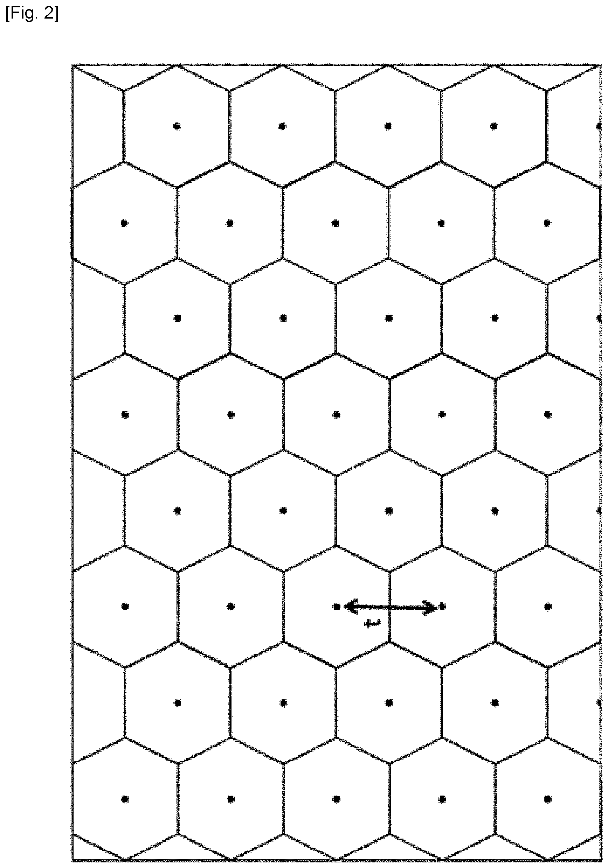

The average spacing (t) between the hair-like bodies is preferably 20 to 200 µm, more preferably 40 to 150 µm, and even more preferably 40 to 100 µm. As shown in, for example, Figure 2, the spacing between the hair-like bodies means the distance between the center of the root of a hair-like body to the center of the root of a neighboring hair-like body. By setting the average spacing to 20 µm or more, a good tactile sensation is ensured and by setting the average spacing to 200 µm or less, a good tactile sensation such as moistness, softness, and fluffiness is obtained. The average spacing between the hair-like bodies is a value obtained by measuring the spacing between neighboring hair-like bodies at a number of locations on the resin sheet body and using the arithmetic mean value of the measurements.

The shape of the hair-like bodies is not particularly limited and may be configured to extend hair-like in a direction away from the base layer in a shape in which the hair-like bodies gradually thin approaching the tip or in which a swelling is formed at the tip. In other words, the hair-like bodies may have a shape in which the cross-sectional area gradually shrinks with increasing distance from the base layer and then once again increases when the shape terminates. In addition, the shape of the tip part of the hair-like bodies may be bud-shaped or mushroom-shaped. In addition, the hair-like bodies may have a portion positioned at the base end extending in a direction away from the base layer, a portion that extends from the portion positioned at the base end and is curved with a certain curvature or a curvature that gradually changes, and furthermore, a portion that is wound in a helix shape or a spiral shape. In this case, the tip parts of the hair-like bodies may have a shape that is folded inward. By having such a shape, a good tactile sensation is expressed. In addition, due to the bud-shaped or mushroom-shaped portion being hollow, a better tactile sensation is expressed. When forming a bud-shaped or mushroom-shaped portion at the hair-like tips, it is preferable that the ratio of the average diameter of the width of the bud shape or mushroom shape with respect to the average diameter of the hair-like bodies be 1.1 or greater. The height of the bud shape or mushroom shape is preferably 7 µm or more. The average diameter of the hair-like bodies as well as the average diameter of the width and the height of the bud shape or mushroom shape are values obtained by measuring with a scanning electron microscope photograph and using the arithmetic mean value. The hair-like bodies consist of a thermoplastic resin. The same resins that can be used in the base layer can be used as the thermoplastic resin.

The thermoplastic resin included in the base layer and the hair-like bodies may form an at least partially three-dimensional cross-linked structure (for example, a three-dimensional network structure). For example, in some embodiments, at least some of the hair-like bodies are cross-linked bodies, and in other embodiments, the overall surface of the hair-like bodies is a cross-linked body, and in yet other embodiments, the entirety (from the boundary with the base layer to the tip part) of the hair-like bodies may be a cross-linked body. Examples of methods for forming a cross-linked body include a method involving molding a resin sheet and then irradiating the surface thereof having hair-like bodies with an electron beam and a method involving adding an organic peroxide and forming by heating and humidifying during or after molding of the resin sheet. Examples of resins in which an organic peroxide is added include commercially available products such as "LINKLON" manufactured by Mitsubishi Chemical Corporation. In the present embodiment, it is preferable that cross-linked bodies be formed by electron beam irradiation (electron beam cross-linked bodies).

In one embodiment, when the angle of the hair-like bodies when extending perpendicular to a surface of the base layer is assumed to be 0°, the average value of the angle of the hair-like bodies that increases due to heat molding is preferably 0° to 10°. The angle is more preferably 0° to 9° and even more preferably 0° to 8°.
The angle can be calculated by measuring the angle of hair-like bodies using, for example, a laser microscope for a resin sheet body before heat molding and the resin sheet body from which the protective layer has been peeled off after heat-molding the laminated resin sheet, and subtracting the angle before heat molding from the angle after heat molding.
Here, heat molding means setting the laminated resin sheet in a mold, injecting a polycarbonate resin into the mold to obtain an insert-molded product decorated by the laminated resin sheet, and finally peeling off the protective layer. When setting the laminated resin sheet in a mold, the laminated resin sheet may be set therein, as is, and it is also possible to carry out preforming in advance to impart a three-dimensional shape to the laminated resin sheet and then set the laminated resin sheet therein. Examples of preforming methods include vacuum molding, pressure molding, vacuum pressure molding, and TOM molding. As the preforming temperature conditions, it is possible to adopt a sheet surface temperature of 100 to 150 °C and a heating time of 40 to 300 seconds. As the resin that is injected, it is possible to use, in addition to a polycarbonate (PC) resin, an ABS resin, an AES resin, a polyester resin, an acrylic resin, and an alloy resin combining these resins. As the injection temperature conditions, it is possible to adopt a mold temperature of 40 °C, an injected resin temperature of 280 °C, and dwelling at 30 MPa.
Specific heat molding can be performed under the conditions below.
· Using a vacuum pressure molding machine, preforming is carried out on the laminated resin sheet under the conditions below to impart a three-dimensional shape. The imparting of a three-dimensional shape can be performed by using a convex cover panel mold that gently curves 10 mm from the end to the center on a surface having a long side of 200 mm and a short side of 100 mm and bringing the surface of the laminated resin sheet on the substrate layer side, that is, the surface opposite the protective layer, into contact with the convex surface of the mold.
   Sheet surface temperature: 100 to 150 °C
   Heating time: 40 to 300 seconds
   Mold shape: Long side 200 mm, short side 100 mm
· Thereafter, the laminated resin sheet to which a three-dimensional shape has been imparted is removed from the mold, the excess portions are trimmed, and, using an insert molding machine, a polycarbonate resin is injected under the conditions below, thereby allowing a secondary molded product (insert-molded product) to be obtained. The insert molding is performed by placing the surface on the protective layer side of the laminated resin sheet to which a three-dimensional shape has been imparted so as to contact the injection mold, and injecting the resin by flowing the resin to the substrate layer side by means of the side gate method.
   Mold temperature: 40 °C
   Injected resin temperature: 280 °C
   Dwelling: 30 MPa
· After cooling, the molded product is taken out of the mold and the protective layer is peeled off, thereby allowing a final secondary molded product to be obtained.
The average value of the angle that increases due to heat molding can be adjusted by the composition of the resin sheet body, the shape of the hair-like bodies, the composition and average thickness of the protective layer, and the like.

### <Resin Sheet Body>

In the present embodiment, "tactile sensation" means the feeling and texture of a surface of the resin sheet body. A judgment is made regarding whether a resin sheet surface feels comfortable when touched and when the surface is judged as feeling comfortable, a resin sheet having a good specific texture such as moistness, softness, and fluffiness is deemed to have a good tactile sensation.

In one embodiment of the present invention, the thickness of the resin sheet body refers to the thickness combining the average height of the hair-like bodies and the average thickness of the base layer. The resin sheet body thickness is preferably 45 to 800 µm, more preferably 100 to 500 µm, and even more preferably 130 to 300 µm. The resin sheet body thickness may be 80 µm or more and less than 350 µm. By setting the thickness to 45 µm or more, a good tactile sensation can be sufficiently ensured and by setting the thickness to 800 µm or less, production costs can be suppressed. The resin sheet body thickness can be measured in accordance with JIS L 1913: 2010, Method A.

### <Protective Layer>

The protective layer (2) is a layer that fills the gaps between the hair-like bodies and covers the surface of the resin sheet body on the side having the hair-like bodies. "Filling the gaps" means filling up the space between neighboring hair-like bodies and, more preferably, means filling up the space between neighboring hair-like bodies from the roots to the tips thereof. The tensile modulus of the protective layer at 20 °C is 0.2 MPa or more and less than 2 MPa. The tensile modulus of the protective layer at 20 °C is preferably 0.3 MPa or more and less than 1.9 MPa, more preferably 0.3 MPa or more and less than 1.8 MPa, and even more preferably 0.4 MPa or more and less than 1.7 MPa. By setting the tensile modulus of the protective layer at 20 °C to 0.2 MPa or more, it is possible to suppress residue from remaining when the protective layer is peeled off after molding. In addition, by setting the tensile modulus to 2 MPa or less, it is possible to suppress reductions in cushioning properties.
The tensile modulus of the protective layer can be measured by, for example, cutting out a 12 cm × 2.5 cm (the long side being in the CMD direction) test piece of the protective layer, setting the test piece in a small tabletop test machine ("EZ Test/CE" manufactured by Shimadzu Corporation), and carrying out a tensile test (distance between chucks: 50 mm, tensile speed: 100 mm/minute) at room temperature (20 °C), and determining the tensile modulus (slope from 0 to 4% strain) in the elastic region from the stress-strain (S-S) curve that was acquired.

In one embodiment of the present invention, the tensile strength of the protective layer is 1.0 to 30 MPa. The tensile strength of the protective layer is preferably 1.5 to 30 MPa and more preferably 1.5 to 30 MPa. By setting the tensile strength of the protective layer to 1.0 MPa or more, it is possible to suppress residue from remaining when the protective layer is peeled off after molding.
The tensile strength of the protective layer can be determined, for example, from the maximum value of the stress-strain (S-S) curve that is acquired by cutting out a 12 cm × 2.5 cm (the long side being in the CMD direction) test piece of the protective layer, setting the test piece in a small tabletop test machine ("EZ Test/CE" manufactured by Shimadzu Corporation), and carrying out a tensile test (distance between chucks: 50 mm, tensile speed: 100 mm/minute) at room temperature (20 °C).

The average thickness of the protective layer is preferably 50 to 600 µm, more preferably 80 to 400 µm, even more preferably 90 to 300 µm, and even more preferably 100 to 250 µm. By setting the average thickness to 50 µm or more, there are more portions where the hair-like bodies are completely covered by the protective layer, making it easier to suppress slanting of the hair-like bodies due to molding. In addition, by setting the average thickness to 600 µm or less, production costs can be suppressed. The average thickness of the protective layer can be measured directly by peeling the protective layer from the laminated resin sheet and using a micrometer.
In the present embodiment, the average thickness of the protective layer is greater than the average height of the hair-like bodies. By making the average thickness of the protective layer greater than the average height of the hair-like bodies, the hair-like bodies are completely covered by the protective layer, making it possible to strengthen the effect of suppressing slanting of the hair-like bodies due to molding.

The material and formation method of the protective layer are not particularly limited, so long as the tensile modulus at 20 °C is 0.2 MPa or more and less than 2 MPa and the peeling strength between the resin sheet body and the protective layer is 0.01 N/mm or more and less than 0.10 N/mm. For example, the protective layer may be formed by coating the surface of the resin sheet that has hair-like bodies with a silicone-based resin and curing, and by laminating a hot melt film on the surface of the resin sheet that has hair-like bodies and heating to cause the film to conform to the recessed and protruding shape of the hair-like bodies.
As the silicone-based resin, it is possible to use a peroxide-curable type silicone-based resin, a condensation-curable type silicone-based resin, an addition-curable type silicone-based resin, a UV-curable type silicone-based resin, and the like.
As the hot melt film, it is possible to use an olefin-based hot melt film, a polyamide-based hot melt film, a polyurethane-based hot melt film, a polyester-based hot melt film, and the like.

In addition, the composition serving as the raw material for the protective layer may, similar to thermoplastic resin composition forming the base layer and the hair-like bodies, contain other additives so long as the effects of the present invention are not inhibited.

### <Laminated Resin Sheet>

The laminated resin sheet in the present embodiment is a laminated resin sheet including: a resin sheet body having hair-like bodies arranged regularly on at least one surface of a base layer, a continuous phase being formed without a structural boundary between the base layer and the hair-like bodies; and a protective layer filling the gaps between the hair-like bodies and covering the surface of the resin sheet body on the side having the hair-like bodies, the tensile modulus of the protective layer at 20 °C being 0.2 MPa or more and less than 2 MPa.

In one embodiment, the peeling strength between the resin sheet body and the protective layer is 0.01 to 0.10 N/mm. The peeling strength between the resin sheet body and the protective layer is preferably 0.01 to 0.08 N/mm, more preferably 0.02 to 0.08 N/mm, and even more preferably 0.02 to 0.05 N/mm. By setting the peeling strength to 0.01 N/mm or more, it is possible to suppress the protective layer from peeling during molding, which causes the hair-like bodies to fall over, resulting in a poor external appearance. In addition, by setting the peeling strength to 0.10 N/mm or less, it is possible to suppress residue of the protective layer from remaining due to being unable to peel off the protective layer after molding and the shape of the hair-like bodies from becoming deformed after peeling, resulting in a poor external appearance. The peeling strength can be adjusted based on the selection of materials for the resin sheet and the protective layer.
The peeling strength between the resin sheet body and the protective layer in the laminated resin sheet can be determined in the following manner: A laminated resin sheet consisting of a resin sheet body and a protective layer is cut to a width of 25 mm, the resin sheet body is placed horizontally below a grip of a universal material tester using a 90° peeling tool such that the protective layer faces up, the protective layer that has been peeled from the resin sheet at the bottom is inserted in the upper part of the grip, and then the grip holding the protective layer above is pulled in the direction normal to the sheet surface at a tensile speed of 100 mm/minute to measure the peeling strength.

In one embodiment of the present invention, the average thickness of the laminated resin sheet refers to the thickness combining the average thickness of the base layer and the average thickness of the protective layer. The average thickness of the laminated resin sheet is preferably 65 to 900 µm, more preferably 100 to 700 µm, and even more preferably 200 to 500 µm. The laminated resin sheet thickness can be measured in accordance with JIS K 7130: 1999.

### [Second Embodiment]

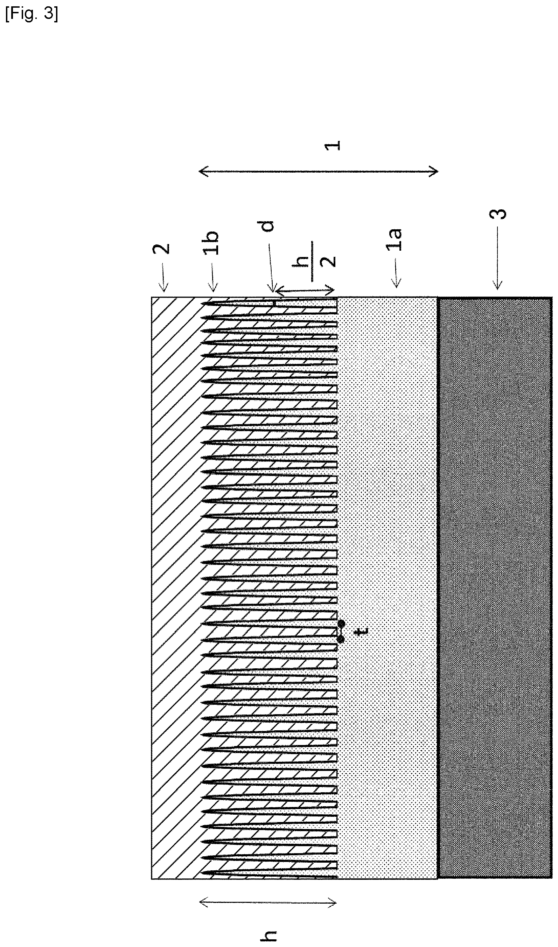

An example of a laminated resin sheet according to a second embodiment of the present invention is a laminated resin sheet in which a substrate layer is formed on the surface of a base layer opposite the side having hair-like bodies, as shown in Figure 3. That is, the layer configuration of the laminated resin sheet according to the second embodiment is, from top to bottom, a protective layer (2), hair-like bodies and a base layer (1), and a substrate layer (3).
The average thickness of the substrate layer is preferably 50 to 1000 µm, more preferably 100 to 800 µm, and even more preferably 150 to 500 µm. By setting the average thickness of the substrate layer to 1000 µm or less, manufacturing costs can be suppressed.
Here, the hair-like bodies and the base layer are the same as those described in the first embodiment, so description thereof is omitted. The total value of the average thicknesses of the protective layer, hair-like bodies, base layer, and substrate layer is 80 to 1000 µm, more preferably 200 to 800 µm, and even more preferably 300 to 600 µm.
It is preferable that a thermoplastic resin capable of being adhered to the base layer be used as the substrate layer in the resin sheet according to the second embodiment. For example, the same thermoplastic resin composition as that of the base layer, a polycarbonate-based resin, a polyester-based resin, and a polymer alloy resin thereof can be suitably used. The mass ratio between the polycarbonate-based resin and the polyester-based resin in the polymer alloy resin is preferably 50:50 to 90:10, more preferably 60:40 to 80:20, and even more preferably 65:35 to 75:25.
Here, the polymer alloy resin refers to a polymer multicomponent system. The polymer alloy resin may be a polymer blend of a certain miscibility by blending or the like, may be a block copolymer or a graft copolymer by copolymerization, or may be a mixture of resins with no miscibility.
Examples of the polycarbonate-based resin include substances derived from aliphatic dihydroxy compounds and substances derived from aromatic dihydroxy compounds. For example, substances derived from aromatic dihydroxy compounds can be suitably used and substances derived from aromatic dihydroxy compounds (bisphenols) in which two aromatic dihydroxy compounds are bonded via a certain type of bonding group are particularly preferable. Substances produced by known production methods by polycondensation of a dihydroxy compound and phosgene or a carbonic ester can be used as these resins. The production method is not limited thereto, and commercially available resins can also be used.
As the polyester-based resin, polyethylene terephthalate, polybutylene terephthalate, polyethylene-2,6-naphthalate, polymethylene terephthalate, a polyester resin in which, as copolymerization components, for example, a diol component such as diethylene glycol, neopentyl glycol, or polyalkylene glycol, and a dicarboxylic acid component such as adipic acid, sebacic acid, phthalic acid, isophthalic acid, or 2,6-naphthalene dicarboxylic acid are copolymerized, and the like can be used.
The substrate layer may contain other additives as necessary. So long as the effects of the present invention are not inhibited, it is possible to add, as the other additives, an additive such as a water repellent, an oil repellent, a colorant such as a pigment or a dye, a lubricant/mold release agent such as silicone oil or an alkyl ester-based agent, a fibrous reinforcing agent such as glass fibers, or as a filler, a granular microparticle such as talc, clay, or silica, or a scaly microparticle such as mica, a low molecular weight type anti-static agent such as a salt compound of sulfonic acid and an alkali metal and the like, or a high molecular weight type anti-static agent such as polyether ester amide, a flame retardant, an anti-bacterial agent, an anti-viral agent, or a heat stabilizer. In addition, scrap resin generated in the resin sheet production process can also be mixed and used. In addition, so long as the effects of the present invention are not inhibited, the substrate layer may have a partially cross-linked structure.

### [Production of Resin Sheet Body]

The method for producing a resin sheet body according to the present invention is not limited and may be any method, but typically includes steps of melt-extruding a raw material resin and adding regularly arranged hair-like bodies to at least one surface of the obtained sheet. When producing the resin sheet body, for example, a feed block or a multi-manifold die can be used. Moreover, the layer configurations of the embodiments of the resin sheet body of the present application are basically as discussed previously, but beyond these, for example, scrap raw material generated in a production process may be laminated as a further layer so long as degradation of physical properties and the like are not observed.

The method for adding the hair-like bodies is not particularly limited and any method known by a person skilled in the art can be used. Examples include a production method using an extrusion molding technique, a production method using a roll-to-roll technique, a production method using a photolithography technique, a production method using a hot pressing technique, a production method using a pattern roll and a UV curable resin, a production method using a 3D printer, a method for covalent bonding with a polymerization reaction after embedding the hair-like bodies in the resin layer, and the like.

For example, when using an extrusion molding technique, the resin sheet body can be produced by extruding a sheet with a T-die technique and casting with a transfer roll on which recesses and protrusions have been formed and a touch roll so as to add the shapes of hair-like bodies to a surface of the sheet.
As the transfer roll on which recesses and protrusions have been formed, a roll in which fine recesses and protrusions, with sizes from several micrometers to several hundreds of micrometers, have been applied regularly on a surface thereof with a laser engraving or electrocasting method, an etching method, a mill engraving method, or the like can be used. Here, regular means that the recesses and protrusions are in an arranged state that is not random, that is, a state of being arranged in an orderly fashion in one direction or in two directions. The arrangement of the recesses and protrusions in some embodiments can be selected from a vertically and horizontally arranged grid arrangement, a staggered arrangement, and the like. Examples of the shape of the recesses and protrusions include, for example, if the shape of a recess, funnel shapes (cones, quadrangular pyramids, triangular pyramids, hexagonal pyramids, and the like), semicircles, rectangles (quadrangular prisms), and the like. As the size thereof, the diameter of the opening of the recess, the depth of the recess, and the spacing of the recess shapes are from several micrometers to several hundreds of micrometers. For example, a metal, a ceramic, or the like can be used as the material of the transfer roll. The spacing between the hair-like bodies can be adjusted by adjusting the spacing between the recesses on the transfer roll and the height of the hair-like bodies can be adjusted by adjusting the depth of the recesses on the transfer roll, and the tactile sensation can also be adjusted thereby.
In addition, it is preferable that recesses and protrusions with a high aspect ratio be formed on the transfer roll surface. For example, the aspect ratio (recess depth/recess opening diameter) when processing recess shapes into the transfer roll surface is preferably 1.0 to 9.0 or 1.0 to 2.0. In forming recesses and protrusions with a high aspect ratio on the transfer roll surface, in comparison with an etching method, a blasting method, a mill-engraving method, or the like, a laser engraving method or an electrocasting method is suitable when performing precision processing in the depth direction and thus is particularly suitably used.
For example, a metal, a ceramic, or the like can be used as the material of the transfer roll. Meanwhile, various materials can be used as the touch roll. For example, a roll made from silicone-based rubber, NBR-based rubber, EPT-based rubber, butyl rubber, chloroprene rubber, or fluorine rubber can be used. In some embodiments, a touch roll with a rubber hardness (JIS K 6253) of 40 to 100 can be used. In addition, a Teflon^{®} layer may be formed on the surface of the touch roll.
Various materials can be used as the touch roll. For example, a roll made from silicone-based rubber, NBR-based rubber, EPT-based rubber, butyl rubber, chloroprene rubber, or fluorine rubber can be used. In some embodiments, a touch roll with a rubber hardness (JIS K 6253) of 40 to 100 can be used. In addition, a Teflon^{®} layer may be formed on the surface of the touch roll.
The resin sheet body of the present embodiment can be produced by using a roll set of the transfer roll and touch roll above.
In some embodiments, the resin sheet body of the present embodiment can be produced by adjusting the temperature of the transfer roll to near the crystal fusion temperature, the glass transition point, or the melting point of the thermoplastic resin (for example, 100 to 150°C when using a random polypropylene) and casting with a pinch pressure between the transfer roll and the touch roll of 30 to 120 Kg/cm². The cast resin sheet is taken in at a line speed of 0.5 to 30 m/minute using a pinch roll or the like.

### [Formation of Protective Layer]

The method for forming the protective layer according to the present embodiment is not particularly limited and any method known by a person skilled in the art can be used. Examples include a method including a step of applying a raw material resin of the protective layer to a surface of a produced resin sheet body having hair-like bodies, and a method including a step of melting a raw material resin that has been formed into a sheet-like shape in advance and then attaching to the surface.

### [Molded Product]

The molded product of the present embodiment is a molded product using the laminated resin sheet of the present embodiment. The laminated resin sheet of the present embodiment is compatible with molding in general and examples of molding methods include, other than insert molding and in-mold molding, general vacuum molding and pressure molding, and as applications thereof, a method of heating and softening a resin sheet in vacuum and overlaying on (molding to) a surface of an existing molded product by exposing the sheet to atmospheric pressure, and the like, but the molding method is not limited thereto. In addition, known sheet heating methods such as radiation heating with an infrared heater or the like, which is non-contact heating, can be adapted as a method to heat and soften a sheet before molding. In vacuum-pressure molding in some embodiments, for example, a resin sheet is heated for 20 to 480 seconds at a surface temperature of 60 to 220 °C and then molded onto an existing molded product surface and can be stretched to 1.05 to 2.50 times depending on the surface shape.

The laminated resin sheet of the present embodiment can be applied to a use requiring the good tactile sensation indicated above. For example, the laminated resin sheet can be applied to automobile interior materials, electronic device cladding, or cosmetic container surface materials.

Examples of automobile interior materials include the portions of the automobile interior that hands come into contact with such as the steering wheel, dashboard, levers, and switches. Examples include interior materials in which the abovementioned resin sheet is molded and attached to a surface of a known instrument panel or pillar (for example, JP 2009-184421 A). By attaching the resin sheet, an interior material to which a good tactile sensation has been imparted can be achieved. As the material of the resin sheet to be attached, considering light resistance and chemical resistance, olefin-based resins, vinyl chloride-based resins, and urethane-based elastomers are preferable. The method for attaching the resin sheet and the interior material together is not particularly limited.

Examples of the electronic device cladding include transmitter housings for keyless entry systems, smartphone housings, smartphone cases, music player cases, game console housings, digital camera housings, electronic notebook housings, calculator housings, tablet housings, mobile computer housings, keyboards, mice, and the like. Examples include portable transmitters in which the resin sheet of the present invention is molded and attached to a surface of a portable transmitter housing of a known keyless entry system (for example, JP 2005-228911 A). By attaching the resin sheet, a portable transmitter to which a good tactile sensation has been imparted can be achieved. As the material of the resin sheet to be attached, an olefin-based resin or a urethane-based elastomer is preferable. The method for attaching the resin sheet and the housing together is not particularly limited.

Examples of cosmetic containers include containers for face cream, pack cream, foundation, and eyeshadow, and for example, a cosmetic container in which the resin sheet of the present invention is molded and attached to a surface of a lid member of a known container for foundation (JP 2017-29608 A) can be raised as an example. By attaching the resin sheet, a cosmetic container to which a good tactile sensation has been imparted can be achieved. As the material of the resin sheet to be attached, an olefin-based resin or a urethane-based elastomer is preferable. The method for attaching the resin sheet is not particularly limited.

Furthermore, a hair-like body sheet in which words or patterns are printed on the surface of the hair-like bodies with a general printing method (an offset printing method, a gravure printing method, a flexographic printing method, a screen printing method, foil stamping, and the like) can be produced and applied to the use above. The material of the resin sheet to be printed on is not particularly limited, but it is preferable that the printability with the ink used in printing be considered.

In addition, it is also possible to create a laminate body by laminate molding (dry laminate molding or extrusion laminate molding) with a printed article on which words, patterns, or the like are printed (such as paper or a metal thin film), a non-woven cloth, or the like. For example, a business card with a tactile sensation can be created by laminate molding to the printing surface of the business card. The material of the resin sheet to be laminated is not particularly limited.

### EXAMPLES

The present invention shall be described in more detail below using examples and comparative examples, but the present invention is not at all limited by the details of the examples and the like. Note that "parts" in the present examples are by weight.

The raw materials and the production methods therefor used in the examples and the like are as follows.
(1) Hair-like bodies and base layer
   - (A-1) TPU (urethane-based elastomer) "A3086A17J" (manufactured by BASF)
(2) Substrate layer
   - (B-1) PC/polyester "PCX-6694" (manufactured by Sumika Polycarbonate Ltd.)
(3) Protective layer
   - (C-1) Silicone-based resin "KE-1316" (manufactured by Shin-etsu Chemical Co., Ltd.) + Curing agent "CAT-1316" (manufactured by Shin-etsu Chemical Co., Ltd.)
   - (C-2) Silicone-based resin "KE-1300T" (manufactured by Shin-etsu Chemical Co., Ltd.)
      + Curing agent "CAT-1300" (manufactured by Shin-etsu Chemical Co., Ltd.)
   - (C-3) Silicone-based resin "KE-1314-2" (manufactured by Shin-etsu Chemical Co., Ltd.)
      + Curing agent "CAT-1314S" (manufactured by Shin-etsu Chemical Co., Ltd.)

The evaluation methods for the various characteristics of the resin sheet bodies, laminated resin sheets, and formed products of the laminated resin sheets created in the examples and comparative examples are as follows.

### (1) Average height of hair-like bodies, average diameter of hair-like bodies, average spacing between hair-like bodies, and average thickness of base layer

The height (h) of the hair-like bodies, the diameter (d) of the hair-like bodies, the spacing (t) between the hair-like bodies, and the thickness of the base layer of the resin sheet body were measured using a laser microscope (VK-X100 manufactured by KEYENCE CORPORATION). The measured samples were cross-sectional slices cut from the resin sheets at three arbitrary locations using a microtome. The height of ten hair-like bodies was measured for each sample and the arithmetic mean value of the 30 measurements was used as the average height of the hair-like bodies. For the average diameter of the hair-like bodies, the diameter of ten hair-like bodies on each sample was measured at mid-height (h/2) and the arithmetic mean value of the 30 measurements was used. For the average spacing between the hair-like bodies, the distance from the center of the root of one hair-like body to the center of the root of a neighboring hair-like body was measured at ten locations on each sample and the arithmetic mean value of the 30 measurements was used. For the average thickness of the base layer, the thickness of each layer was measured at ten locations on each sample and the arithmetic mean value of the 30 measurements was used. The thickness of the base layer is the distance from the roots of the hair-like bodies to the interface with the other layer.

### (2) Evaluation of physical properties of protective layer

The tensile modulus and the tensile strength of the protective layer were determined as follows: A 12 cm × 2.5 cm (the long side being in the CMD direction) test piece of the protective layer was cut out. The test piece was then set in a small tabletop test machine ("EZ Test/CE" manufactured by Shimadzu Corporation), and a tensile test was carried out (distance between chucks: 50 mm, tensile speed: 100 mm/minute) at room temperature (20 °C). The tensile modulus (slope from 0 to 4% strain) in the elastic region was then determined from the stress-strain (S-S) curve that was acquired. In addition, the point of maximum stress was taken as the tensile strength.

### (3) Measurement of peeling strength between resin sheet body and protective layer

The peeling strength between the resin sheet body and the protective layer in the laminated resin sheet was determined in the following manner: A laminated resin sheet consisting of a resin sheet body and a protective layer was cut to a width of 25 mm, a 90° peeling tool (manufactured by TOYO SEIKI co., LTD.) was attached to the bottom of a universal material tester ("Strograph VE1D" manufactured by TOYO SEIKI co., LTD.), the resin sheet body was placed horizontally such that the protective layer faces up, the protective layer that has been peeled from the resin sheet below was inserted in the grip above, and then the upper part of the grip holding the protective layer was pulled in the direction normal to the sheet surface at a tensile speed of 100 mm/minute to measure the peeling strength.

### (4) Handling of protective layer

When the protective layer was able to be peeled off from the laminated resin sheet without any problems, ○ was given, and when the protective layer tore or the like and was not able to be peeled off cleanly, × was given.

### (5) Measurement of hair-like body falling-over angle

The angle of the hair-like bodies was measured using a laser microscope (VK-X100 manufactured by KEYENCE CORPORATION) for resin sheet bodies before secondary molding and resin sheet bodies from which the protective layer had been peeled off after subjecting the laminated resin sheets to secondary molding. The measured samples were cross-sectional slices cut from the resin sheet bodies at three arbitrary locations using a microtome. The hair-like body falling-over angle of ten hair-like bodies was measured for each sample and the arithmetic mean value of the 30 measurements was used. For the hair-like body falling-over angle, the angle of a hair-like body when extending perpendicular to the base layer surface is assumed to be 0°.

### (6) Whitening check

An external appearance assessment by an external panel of a total of ten people, five men and five women, was carried out for resin sheet bodies before secondary molding and secondary molded products of the laminated resin sheets. For the difference in colors when comparing the two and the difference in colors in the secondary molded products, a case where no differences were observed was judged as "whitening did not occur" and a case where differences were observed in at least one was judged as "whitening occurred". When eight or more people out of ten arrived at the judgment that "whitening did not occur", an overall evaluation of "○" was given, when four or more and seven or fewer people out of ten arrived at the judgment that "whitening did not occur", an overall evaluation of "△" was given, and when three or fewer people out of ten arrived at the judgment that "whitening did not occur", an overall evaluation of "×" was given.

### (7) Good tactile sensation sensory evaluation

A sensory evaluation of the good tactile sensation was carried out by having an external panel of a total of ten people, five men and five women, touch the resin sheet bodies from which the protective layer had been peeled off after subjecting the laminated resin sheets to secondary molding. Evaluation was made with a ten-point scale for the specific tactile sensations (smooth, moist, dry, coarse, and the like) when touching the resin sheet body surface and the tactile sensation with the highest score was made the tactile sensation of the resin sheet surface. In Table 1, "○" indicates that the score for smooth or moist was high and that even after secondary molding a good tactile sensation like that of a suede-like napped sheet was obtained. "△" indicates that the score for smooth or moist was high but the tactile sensation with the highest score dropped by three points or more due to secondary molding. "×" indicates that the score for dry or coarse was high and a good tactile sensation after secondary molding was not obtained.

### (Production of Laminated Resin Sheet)

### [Examples 1 to 3 and Comparative Examples 2 to 4]

The (A-1) urethane-based elastomer for forming the hair-like bodies and the base layer was streamed from a 40-mm single-screw extruder, the (B-1) PC/polyester resin for forming the substrate layer was streamed from a 65-mm single-screw extruder, and a resin sheet was extruded with a co-extrusion multi-layer T-die method. The extruded resin sheet was cast using a transfer roll on which recesses and protrusions had been formed with chromium oxide spraying and a laser engraving method and which was adjusted to 60 to 150 °C and a silicone-based rubber touch roll with a rubber hardness of 70 and adjusted to 10 to 90 °C and taken in at a line speed of 1 to 15 m/minute using a pinch roll. Resin sheet bodies with the compositions, the thicknesses, and the surface shapes shown in Table 1 were obtained thereby. Next, any one of the silicone-based resins (C-1) to (C-3) for forming the protective layer and a curing agent were mixed at a ratio of 9 : 1 and then spread over the resin sheet body surface with a brass rod to form protective layers with the thicknesses indicated in Table 1, and laminated resin sheets were obtained.

### [Comparative Example 1]

The (A-1) thermoplastic resin for forming the hair-like bodies and the base layer was streamed from a 40-mm single-screw extruder, the (B-1) PC/polyester resin for forming the substrate layer was streamed from a 65-mm single-screw extruder, and a resin sheet was extruded with a co-extrusion multi-layer T-die method. The extruded resin sheet was cast using a transfer roll on which recesses and protrusions had been formed with chromium oxide spraying and a laser engraving method and which was adjusted to 60 to 150 °C and a silicone-based rubber touch roll with a rubber hardness of 70 and adjusted to 10 to 90 °C and taken in at a line speed of 1 to 15 m/minute using a pinch roll. Resin sheet bodies with the compositions, the thicknesses, and the surface shapes shown in Table 1 were obtained thereby. A protective layer was not formed.

### (Production of Secondary Molded Product)

Using a vacuum pressure molding machine ("NGF-0406-S" manufactured by Fuse Vacuum Forming Co. Ltd.), preforming was carried out on the laminated resin sheet under the conditions below to impart a three-dimensional shape. The imparting of a three-dimensional shape was performed by using a convex cover panel mold that gently curves 10 mm from the end to the center on a surface having a long side of 200 mm and a short side of 100 mm and bringing the surface of the laminated resin sheet on the substrate layer side, that is, the surface opposite the protective layer, into contact with the convex surface of the mold.
- Sheet surface temperature: 100 to 150 °C
- Heating time: 40 to 300 seconds
- Mold shape: Long side 200 mm, short side 100 mm
Thereafter, the laminated resin sheet to which a three-dimensional shape has been imparted was removed from the mold, the excess portions were trimmed, and, using an insert molding machine ("SE315EV-A-HD" manufactured by Sumitomo Heavy Industries, Ltd.), a polycarbonate resin ("H3700UR" manufactured by Mitsubishi Engineering-Plastics Corporation) was injected under the conditions below, thereby allowing a secondary molded product (insert-molded product) to be obtained. The insert molding was performed by placing the surface on the protective layer side of the laminated resin sheet to which a three-dimensional shape has been imparted so as to contact the injection mold, and injecting the resin by flowing the resin to the substrate layer side by means of the side gate method.
- Mold temperature: 40 °C
- Injected resin temperature: 280 °C
- Dwelling: 30 MPa
After cooling, the molded product was taken out of the mold and the protective layer was peeled off, to obtain a final secondary molded product.

Evaluative testing of various characteristics was carried out using the resin sheets obtained in the examples and comparative examples and the results are shown in Table 1.

**[Table 1]**

| | HAIR-LIKE BODIES | | | BASE LAYER | SUBSTRATE LAYER | PROTECTIVE LAYER TYPE AND THICKNESS (µm) | | | PHYSICAL PROPERTIES OF PROTECTIVE LAYER | | PEELING STRENGTH BETWEEN | HANDLING OF PROTECTIVE LAYER | HAIR-LIKE BODY BENDING ANGLE AFTER MOLDING | WHITENING OCCURRENCE AFTER MOLDING | TACTILE SENSATION AFTER MOLDING |
|---|---|---|---|---|---|---|---|---|---|---|---|---|---|---|---|
| | AVERAGE HEIGHT h | AVERAGE DIAMETER d | AVERAGE SPACING t | THICKNESS | THICKNESS | (C-1) | (C-2) | (C-3) | TENSILE MODULUS | TENSILE STRENGTH | RESIN SHEET BODY AND PROTECTIVE LAYER | | | | |
| | (µm) | (µm) | (µm) | (µm) | (µm) | | | | (MPa) | (MPa) | (N/mm) | | (deg.) | | |
| EXAMPLE 1 | 120 | 30 | 60 | 100 | 300 | 130 | - | - | 0.5 | 1.7 | 0.025 | ○ | 8 | ○ | ○ |
| EXAMPLE 2 | 120 | 30 | 60 | 100 | 300 | 150 | - | - | 0.8 | 3.2 | 0.028 | O | 6 | ○ | ○ |
| EXAMPLE 3 | 120 | 30 | 60 | 100 | 300 | 200 | - | - | 1.6 | 8.5 | 0.035 | ○ | 5 | ○ | ○ |
| COMP. EX. 1 | 120 | 30 | 60 | 100 | 300 | - | - | - | - | - | - | ○ | 22 | × | Δ |
| COMP EX. 2 | 120 | 30 | 60 | 100 | 300 | 100 | - | - | 0.3 | 08 | 0.036 | ○ | 13 | × | Δ |
| COMP. EX. 3 | 120 | 30 | 60 | 100 | 300 | - | 150 | - | 1.0 | 3.2 | 0.12 | × | 7 | ○ | ○ |
| COMP. EX. 4 | 120 | 30 | 60 | 100 | 300 | - | - | 150 | 1.2 | 2.8 | 0.005 | ○ | 15 | × | Δ |

The following is clear from the results shown in Table 1.
The results demonstrated that whitening and loss of tactile sensation were suppressed even after performing secondary molding for all of the laminated resin sheets of Examples 1 to 3.
On the other hand, whitening and loss of tactile sensation occurred when secondary molding was performed for the molded product of the laminated resin sheet of Comparative Example 1.
Whitening and loss of tactile sensation occurred when secondary molding was performed for the molded product of the laminated resin sheet of Comparative Example 2.
For the molded product of the laminated resin sheet of Comparative Example 3, whitening and loss of tactile sensation were suppressed even after performing secondary molding, but the protective layer was stuck to the resin sheet body so strongly that the protective layer tore and was not able to be peeled off cleanly.
For the molded product of the laminated resin sheet of Comparative Example 4, the protective layer was stuck so weakly to the resin sheet body that the resin sheet body and the protective layer were displaced during secondary molding, and whitening occurred.

The present invention was described above using various embodiments, but it need not be mentioned that the technical scope of the present invention is not limited to the scope described in the embodiments above. It is clear to a person skilled in the art that it is possible to add various modifications or improvements to the embodiments above. Furthermore, it is clear from the recitations of the patent claims that aspects in which such modifications or improvements are added are included in the technical scope of the present invention.

### INDUSTRIAL APPLICABILITY

The resin sheet of the present embodiment is industrially applicable as a resin sheet that can be secondarily molded and a molded product thereof because whitening and loss of tactile sensation are suppressed even after performing secondary molding.

### REFERENCE SIGNS LIST

- 1: Hair-like bodies and base layer
- 1a: Base layer
- 1b: Hair-like bodies
- d: Diameter of hair-like bodies
- h: Height of hair-like bodies
- t: Spacing between hair-like bodies
- 2: Protective layer
- 3: Substrate layer

## Claims

1. A laminated resin sheet comprising: a resin sheet body having hair-like bodies arranged regularly on at least one surface of a base layer, a continuous phase being formed without a structural boundary between the base layer and the hair-like bodies; and a protective layer filling gaps between the hair-like bodies and covering a surface of the resin sheet body on the side having the hair-like bodies, a tensile modulus of the protective layer at 20 °C being 0.2 MPa or more and less than 2 MPa, an average thickness of the protective layer being greater than an average height of the hair-like bodies.

2. The laminated resin sheet according to claim 1, wherein a peeling strength between the resin sheet body and the protective layer is 0.01 to 0.10 N/mm.

3. The laminated resin sheet according to claim 1 or 2, wherein a tensile strength of the protective layer is 1.0 to 10.0 MPa.

4. The laminated resin sheet according to claim 1 or 2, wherein an average thickness of the protective layer is 50 to 600 µm.

5. The laminated resin sheet according to claim 1 or 2, wherein when an angle of the hair-like bodies when extending perpendicular to the base layer surface is assumed to be 0°, an average value of the angle of the hair-like bodies that increases due to heat molding is preferably 0 to 10°.

6. The laminated resin sheet according to claim 1 or 2, wherein an average height of the hair-like bodies is 30 µm or more and 500 µm or less, an average diameter of the hair-like bodies is 1 µm or more and 50 µm or less, and an average spacing between the hair-like bodies is 20 µm or more and 200 µm or less.

7. The laminated resin sheet according to claim 1 or 2, wherein an average thickness of the resin sheet body is 80 µm or more and less than 350 µm.

8. A production method for the laminated resin sheet according to claim 1 or 2, the production method comprising: forming the protective layer on a surface of the resin sheet body on the side having the hair-like bodies.

9. A molded product of the laminated resin sheet according to claim 1 or 2.

10. The molded product according to claim 9, wherein the molded product is an insert-molded product or a vacuum-molded product.

11. The molded product according to claim 9, wherein the molded product is provided on an automobile interior material, electronic device cladding, or a cosmetic container surface.
